# EUROPÄISCHE PATENTSCHRIFT

(11) **EP 1 306 280 B1**
(45) Veröffentlichungstag und Bekanntmachung des Hinweises auf die Patenterteilung: **07.09.2005**
(21) Anmeldenummer: 02022985.2
(22) Anmeldetag: 14.10.2002
(51) Int. Cl.: B60T 17/08, B65D 45/32, F16B 2/08, F16J 13/06, F16D 65/00

(54) **Abstützelement bei einem Spannring**
Supporting element for a clamp band
Elément de support pour un anneau de serrage

(30) Priorität: 26.10.2001 DE 10153029
(43) Veröffentlichungstag der Anmeldung: 02.05.2003
(73) Patentinhaber: KNORR-BREMSE SYSTEME FÜR NUTZFAHRZEUGE GMBH, 80809 München (DE)
(72) Erfinder: Sommer, Petr, 463 65 Nové Mesto pod Smrkem (CZ)

(56) Entgegenhaltungen:
- GB-A- 1 589 038
- US-A- 3 087 220
- US-A- 4 109 350
- US-A- 5 775 202

## Beschreibung

Die Erfindung betrifft ein Abstützelement, das dazu vorgesehen ist, zumindest abschnittsweise zwischen zwei Ösen eines Spannrings angeordnet zu werden, insbesondere zwischen zwei Ösen eines zum Verbinden von zwei Gehäusehälften einer Bremskammer vorgesehenen Spannrings, um eine Kraft in einer ersten Kraftrichtung auf einen Gegenstand, insbesondere eine Bremskammer, auszuüben, die im Wesentlichen senkrecht zu einer die Ösen verbindenden Geraden orientiert ist.

Ein Spannring ohne Ösen ist beispielsweise aus der US 3,087,220 bekannt, wobei gemäß der Lehre dieser Druckschrift an einem freien Ende des Spannrings ein Spannelement vorgesehen ist, das eine Schraube umfasst, deren Gewinde zum Spannen des Spannrings in Ausnehmungen eingreift, die an dem anderen freien Ende des Spannrings vorgesehen sind.

Aus der GB 1 589 028 ist ein Spannring mit zwei Ösen bekannt, durch die zum Spannen des Spannrings eine Schraube geführt wird, die mit einer Mutter zusammenwirkt.

Aus der US 4,109,250 ist ebenfalls ein Spannring mit zwei Ösen bekannt, durch die zum Spannen einer Schraube geführt wird, die mit einer Mutter zusammenwirkt, wobei der Spannring in diesem Fall zweiteilig ausgebildet ist.

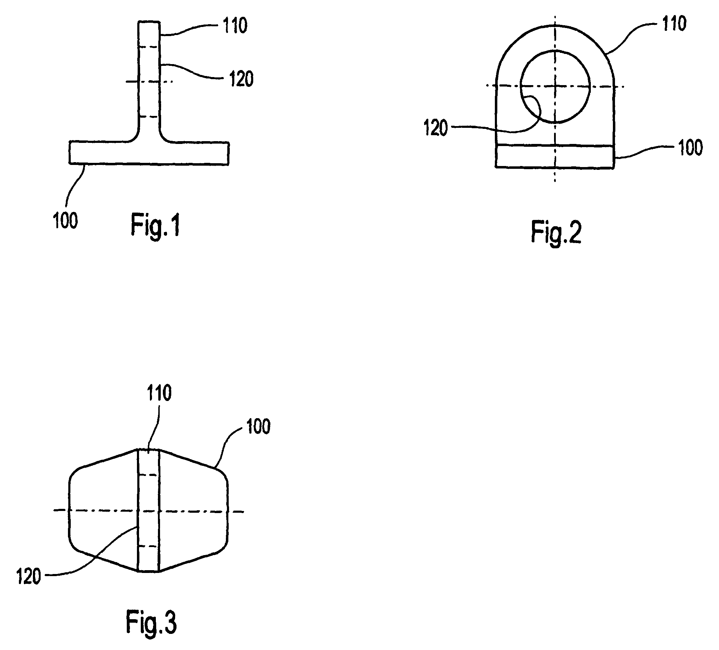

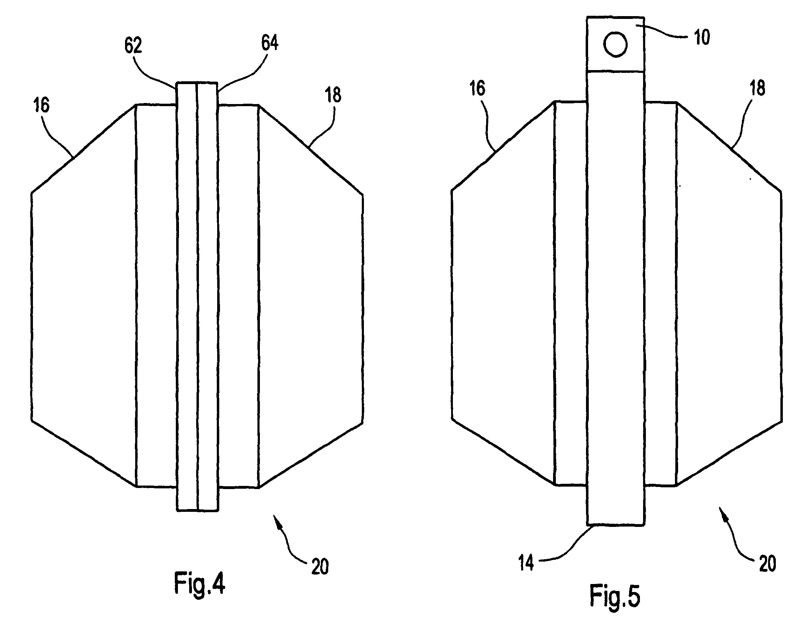

Gattungsgemäße Abstützelemente werden beispielsweise im Zusammenhang mit Bremskammern eingesetzt. Eine derartige Bremskammer ist in den Figuren 4 und 5 schematisch wiedergegeben, wobei die dargestellte Bremskammer aus einer ersten Gehäusehälfte 16 und einer zweiten Gehäusehälfte 18 gebildet ist. Im Verbindungsbereich der Gehäusehälften 16, 18 weist die erste Gehäusehälfte 16 einen Kragen 62 auf, während die Gehäusehälfte 18 einen Kragen 64 aufweist. Um derartige Gehäusehälften 16, 18 dicht miteinander zu verbinden, ist es bereits bekannt, einen Spannring 14 zu verwenden. Ein derartiger Spannring 14 weist zwei Ösen auf (in Figur 5 ist nur eine Öse 10 zu erkennen), die dazu vorgesehen sind, beispielsweise mit Hilfe einer Schraube und einer Mutter zusammengezogen zu werden. Sofern die Gehäusehälften 16, 18 Kragen 62, 64 aufweisen, umgreift der Spannring 14 vorzugsweise diese Kragen 62, 64. Um auch den zwischen den Ösen des Spannrings 14 gelegenen Verbindungsbereich zwischen den Gehäusehälften 16, 18 abzudichten, ist es bereits bekannt, ein Abstützelement zu verwenden, wie es in den Figuren 1 bis 3 dargestellt ist. Das in den Figuren 1 bis 3 dargestellte Abstützelement weist eine Basisfläche 100 auf, auf der ein Steg 110 vorgesehen ist. Der Steg 110 ist mit einer Bohrung 120 ausgestattet. Das Abstützelement wird derart zwischen den Ösen des Spannrings 14 angeordnet, dass die durch die Ösen geführte Schraube auch durch die Bohrung 120 geführt wird. Beim Spannen des Spannrings 14 übt das Abstützelement mit seiner Basisfläche 100 eine Kraft in einer ersten Kraftrichtung auf den zwischen den Ösen gelegenen Verbindungsbereich der Gehäusehälften 16, 18 auf. Die erste Kraftrichtung verläuft dabei senkrecht zu einer (gedachten) die beiden Ösen verbindenden Geraden, bezogen auf den Spannring 14 insbesondere in radialer Richtung. Das in den Figuren 1 bis 3 dargestellte Abstützelement weist jedoch den Nachteil auf, dass es bei der Montage schwierig zu zentrieren ist. Weiterhin kann sich das in den Figuren 1 bis 3 dargestellte Abstützelement während der Nutzungsdauer der Bremskammer lösen, wodurch die gegenseitige Abdichtung der beiden Gehäusehälften 16, 18 unter Umständen nicht mehr gewährleistet ist.

Der Erfindung liegt daher die **Aufgabe** zugrunde, die gattungsgemäßen Abstützelemente derart weiterzubilden, dass ein unbeabsichtigtes Lösen des Abstützelements sicher vermieden wird und dessen Montage trotzdem einfach durchzuführen ist.

Diese Aufgabe wird durch die Merkmale des Anspruchs 1 gelöst.

Vorteilhafte Ausgestaltungen und Weiterbildungen der Erfindung ergeben sich aus den Unteransprüchen.

Das erfindungsgemäße Abstützelement baut auf dem gattungsgemäßen Stand der Technik dadurch auf, dass das Abstützelement einen ersten Abschnitt und einen bezüglich diesem beweglichen zweiten Abschnitt aufweist, der die Kraft in der ersten Kraftrichtung auf den Gegenstand überträgt. Durch die gegenseitige Beweglichkeit des ersten Abschnitts und des zweiten Abschnitts können diese Abschnitte im montierten Zustand des Abstützelements derart gegeneinander vorgespannt angeordnet sein, dass ein unbeabsichtigtes Lösen des Abstützelementes sicher vermieden wird. Darüber hinaus lässt sich das erfindungsgemäße Abstützelement bei der Montage leichter zentrieren.

Bei einer ersten vorteilhaften Weiterbildung des erfindungsgemäßen Abstützelementes ist vorgesehen, dass das Abstützelement einstückig ausgebildet und zumindest abschnittsweise verformbar, insbesondere elastisch verformbar ist. Die Verformbarkeit ermöglicht es insbesondere, dass die Abmessungen des Abstützelementes an den sich beim Spannen des Spannrings verkleinernden Zwischenraum zwischen den Ösen des Spannrings angepasst werden. Im montierten Zustand des Abstützelementes liegt dieses vorzugsweise an beiden Ösen des Spannrings an und füllt dann den gesamten Zwischenraum zwischen diesen Ösen aus.

Insbesondere in diesem Zusammenhang kann bei dem erfindungsgemäßen Abstützelement weiterhin vorgesehen sein, dass der zweite Abschnitt durch eine Zunge gebildet ist, die derart an dem ersten Abschnitt befestigt ist, dass sie bei einer in Richtung der Geraden erfolgenden Verformung des ersten Abschnitts auf den Gegenstand gedrückt wird. Die Verformung des ersten Abschnitts wird dabei während des Spannens des Spannrings hervorgerufen, während sich die Ösen des Spannrings aufeinander zu bewegen.

Bei bevorzugten Ausführungsformen des erfindungsgemäßen Abstützelementes ist vorgesehen, dass es zumindest eine erste Bohrung aufweist, die dazu vorgesehen ist, ein durch zumindest eine Öse geführtes Verbindungsmittel aufzunehmen. Bei dem Befestigungs- beziehungsweise Verbindungsmittel kann es sich insbesondere um eine Schraube handeln, die zum Spannen des Spannrings mit einer Mutter zusammenwirkt. Durch das durch die erste Bohrung geführte Verbindungsmittel wird das Abstützelement im montierten Zustand sicher an seinem Platz gehalten. Altemativ sind Ausführungsformen denkbar, bei denen anstelle der ersten Bohrung nur eine Vertiefung oder dergleichen vorgesehen ist, die beispielsweise mit einer durch die Ösen geführten Schraube zusammenwirken kann.

Bei einer bevorzugten Ausführungsform des erfindungsgemäßen Abstützelementes ist vorgesehen, dass der erste Abschnitt im Wesentlichen W-förmig ausgebildet ist. Diese Ausführungsform kommt insbesondere in Betracht, wenn der W-förmige erste Abschnitt aus einem verformbaren Material gebildet ist, insbesondere aus einem elastisch verformbaren Material.

In diesem Zusammenhang sieht eine vorteilhafte Weiterbildung des erfindungsgemäßen Abstützelementes vor, dass in dem ersten freien Schenkel des im Wesentlichen W-förmigen ersten Abschnitts eine erste Bohrung und in dem zweiten freien Schenkel des im Wesentlichen W-förmigen Abschnitts eine zweite Bohrung vorgesehen ist. In diesem Fall ist es beispielsweise möglich, eine durch die Ösen geführte Schraube zusätzlich durch die erste Bohrung und die zweite Bohrung zu führen, wodurch auch eine unerwünschte Verdrehung des Abstützelementes, beispielsweise um eine zur ersten Kraftrichtung parallele Drehachse, sicher vermieden werden kann.

Wenn das erfindungsgemäße Abstützelement einen W-förmigen ersten Abschnitt aufweist, ist vorzugsweise weiterhin vorgesehen, dass der zweite Abschnitt an einem freien Schenkel des im Wesentlichen W-förmigen ersten Abschnitts befestigt ist. Bei einer derartigen Anordnung des zweiten Abschnitts können die Verbindungsbereiche zwischen den freien Schenkeln und den nicht-freien Schenkeln des W- förmigen ersten Abschnitts die Kraft in der ersten Kraftrichtung auf den zweiten Abschnitt ausüben. Dies gilt insbesondere, wenn diese Verbindungsbereiche beim Spannen des Spannrings nach unten, das heißt in Richtung der ersten Kraftrichtung bewegt werden, was insbesondere durch eine Verkleinerung des Abstands zwischen den freien Enden der freien Schenkel des W-förmigen Abschnitts hervorgerufen werden kann.

In diesem Zusammenhang kann bei dem erfindungsgemäßen Abstützelement weiterhin vorgesehen sein, dass zumindest einer der zwischen den freien Schenkeln des im Wesentlichen W-förmigen ersten Abschnitts vorgesehenen Schenkel eine Ausnehmung aufweist. Diese Ausnehmung ist vorzugsweise zumindest im montierten Zustand des Abstützelementes mit einer ersten Bohrung und/oder einer zweiten Bohrung ausgerichtet. Dadurch kann beispielsweise eine durch die Ösen des Spannrings und die erste und zweite Bohrung geführte Schraube in die Ausnehmung eingreifen. Dieser Eingriff erfolgt dann vorzugsweise derart, dass die Randbereiche der Ausnehmung, im montierten Zustand des Abstützelementes, an der Schraube nach Art eines Anschlags anliegen. Ein derartiger Anschlag ist insbesondere vorteilhaft, wenn die Verbindungsbereiche zwischen den freien Schenkeln und den nicht-freien Schenkeln des W- förmigen ersten Abschnitts in Richtung der ersten Kraftrichtung bewegt werden sollen oder eine Kraft in dieser Richtung übertragen sollen.

Die Erfindung umfasst auch Ausführungsformen des Abstützelementes, bei denen vorgesehen ist, dass der erste Abschnitt und der zweite Abschnitt durch getrennte Teile gebildet sind. Dabei weist das den ersten Abschnitt bildende Teil vorzugsweise die erste Bohrung auf. Auch in diesem Fall kann beispielsweise eine durch die Ösen des Spannrings geführte Schraube durch die erste Bohrung geführt werden, um das den ersten Abschnitt bildende Teil am Platz zu halten.

Insbesondere in diesem Zusammenhang ist vorzugsweise weiterhin vorgesehen, dass der erste Abschnitt eine Exzentrizität aufweist und um eine Drehachse drehbar ist. Die erste Kraft kann dann dadurch erzeugt werden, dass der erste Abschnitt so gedreht wird, dass die Exzentrizität die Kraft in der ersten Kraftrichtung hervorruft beziehungsweise überträgt. Die Drehung des ersten Abschnitts kann ohne darauf beschränkt zu sein erfolgen, nachdem der Spannring gespannt wurde.

Im vorstehend erläuterten Zusammenhang ist bei dem erfindungsgemäßen Abstützelement vorzugsweise weiterhin vorgesehen, dass die Drehachse im Wesentlichen parallel zu der Geraden ist. Eine besonders bevorzugte Ausführungsform sieht dabei vor, dass die Drehachse durch eine durch die Ösen des Spannrings und eine in dem ersten Abschnitt vorgesehene erste Bohrung geführte Schraube gebildet wird, so dass die Drehachse und die Gerade zusammenfallen.

Um die Exzentrizität auszurichten ist bei dem erfindungsgemäßen Abstützelement in diesem Zusammenhang vorzugsweise weiterhin vorgesehen, dass der erste Abschnitt in seinem Außenumfangsbereich zumindest abschnittsweise nach Art einer Mutter ausgebildet ist. Dadurch kann die Exzentrizität beispielsweise mit Hilfe eines Schraubenschlüssels geeignet ausgerichtet werden.

Unabhängig von der speziellen Ausgestaltung des erfindungsgemäßen Abstützelementes sehen bevorzugte Ausführungsformen vor, dass es zumindest teilweise aus Kunststoff gebildet ist. Dies gilt insbesondere, wenn das Abstützelement ganz oder teilweise elastisch ausgebildet ist.

Dabei kann insbesondere vorgesehen sein, dass der Kunststoff Polypropylen ist.

Eine Weiterbildung des erfindungsgemäßen Abstützelementes sieht vor, dass der zweite Abschnitt zumindest einen Steg aufweist, der dazu vorgesehen ist, einen Kragen des Gegenstandes zu umgreifen. Im Zusammenhang mit einer Bremskammer kann es sich bei diesem Kragen insbesondere um einen im Randbereich einer Gehäusehälfte vorgesehenen Kragen handeln.

Weiterhin kann bei dem erfindungsgemäßen Abstützelement vorgesehen sein, dass ein erster Steg eine im Wesentlichen senkrecht zur Geraden und senkrecht zur ersten Kraftrichtung orientierte Kraftkomponente in einer zweiten Kraftrichtung auf den Gegenstand ausübt und/oder dass ein zweiter Steg eine im Wesentlichen senkrecht zur Geraden und senkrecht zur ersten Kraftrichtung orientierte Kraftkomponente in einer dritten Kraftrichtung auf den Gegenstand ausübt. Beispielsweise im Zusammenhang mit Bremskammern können die Kraftkomponenten insbesondere auf die den Verbindungsbereich von zwei Gehäusehälften bildenden Kragen ausgeübt werden, um die Gehäusehälften aufeinander zu vorzuspannen. Zu diesem Zweck sind die zweite Kraftrichtung und die dritte Kraftrichtung vorzugsweise entgegengesetzt orientiert. Dies kann beispielsweise durch V-förmig angeordnete Stege des Abstützelementes erreicht werden.

Ausführungsbeispiele der Erfindung werden nachfolgend anhand der zugehörigen Zeichnungen näher erläutert.

Es zeigen:
- Figur 1: eine Seitenansicht eines Abstützelementes gemäß dem Stand der Technik;
- Figur 2: eine Vorderansicht des Abstützelementes gemäß Figur 1;
- Figur 3: eine Draufsicht des Abstützelementes gemäß Figur 1;
- Figur 4: eine Ausführungsform einer durch zwei Gehäusehälften gebildeten Bremskammer;
- Figur 5: die Gehäusehälften gemäß Figur 4 in einem durch einen Spannring verbundenen Zustand;
- Figur 6: eine perspektivische Darstellung einer ersten Ausführungsform des erfindungsgemäßen Abstützelements;
- Figur 7: eine Draufsicht des Abstützelements gemäß Figur 6;
- Figur 8: eine Seitenansicht des Abstützelements gemäß Figur 6;
- Figur 9: eine Vorderansicht des Abstützelements gemäß Figur 6;
- Figur 10: eine schematische Darstellung des Abstützelements gemäß den Figuren 6 bis 9 in einem montierten Zustand;
- Figur 11: eine Seitenansicht einer zweiten Ausführungsform des erfindungsgemäßen Abstützelementes, bei dem der erste Abschnitt und der zweite Abschnitt durch getrennte Teile gebildet sind;
- Figur 12: eine Vorderansicht des Abstützelementes gemäß Figur 11; und
- Figur 13: eine schematische Darstellung des Abstützelements gemäß den Figuren 11 und 12 in einem montierten Zustand.

Die in den Zeichnungen dargestellten Ausführungsformen des erfindungsgemäßen Abstützelementes können beispielsweise anstelle des in den Figuren 1 bis 3 dargestellten bekannten Abstützelementes verwendet werden, insbesondere im Zusammenhang mit einer Bremskammer, wie sie in den eingangs erläuterten Figuren 4 und 5 dargestellt ist.

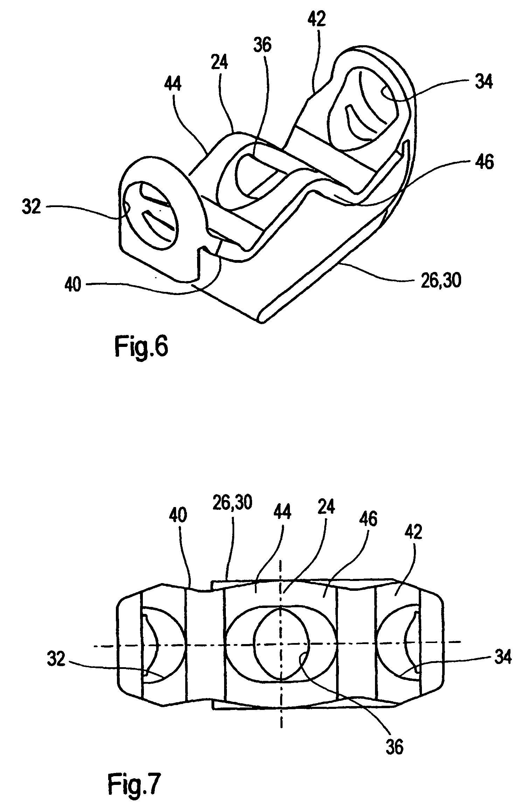

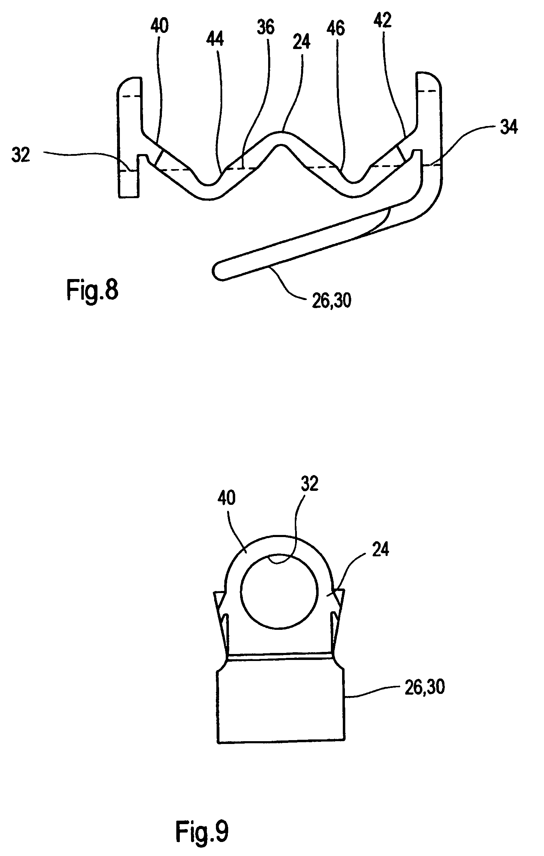

Bei der in den Figuren 6 bis 9 dargestellten Ausführungsform des erfindungsgemäßen Abstützelementes ist der erste Abschnitt 24 im Wesentlichen W-förmig ausgebildet, wie dies insbesondere Figur 8 zu entnehmen ist. Zu diesem Zweck weist der W-förmige erste Abschnitt 24 einen ersten freien Schenkel 40 auf, dessen freier Endabschnitt im dargestellten Fall abgewinkelt ist. Der abgewinkelte freie Endabschnitt des ersten freien Schenkels 40 ist bezogen auf die Darstellungen der Figuren 6 und 8 nach unten etwas verlängert und weist eine erste Bohrung 32 auf. Weiterhin weist der erste Abschnitt 24 einen zweiten freien Schenkel 42 auf, dessen freier Endabschnitt ebenfalls abgewinkelt ist. Auch der freie Endabschnitt des zweiten freien Schenkels 42 ist nach unten verlängert, wobei in dem zweiten freien Schenkel eine zweite Bohrung 34 vorgesehen ist. Die W-Form des ersten Abschnitts 24 wird durch einen ersten nicht-freien Schenkel 44 und einen zweiten nicht-freien Schenkel 46 vervollständigt. Im Verbindungsbereich des ersten nicht-freien Schenkels 44 und des zweiten nicht-freien Schenkels 46 ist eine Ausnehmung 36 vorgesehen. Die erste Öffnung 32, die zweite Öffnung 34 und die Ausnehmung 36 sind derart miteinander ausgerichtet, dass ein durch die Ösen eines Spannrings geführtes Verbindungsmittel, insbesondere eine Schraube, sich durch die erste Öffnung 32, die zweite Öffnung 34 und die Ausnehmung 36 erstrecken kann. Bei der in den Figuren 6 bis 9 dargestellten Ausführungsform des erfindungsgemäßen Abstützelementes ist der zweite Abschnitt 26 durch eine Zunge 30 gebildet. Die Zunge 30 ist an dem zweiten freien Schenkel 42 befestigt und weist ihrerseits einen freien Endabschnitt auf. Die in den Figuren 6 bis 9 dargestellte Ausführungsform des erfindungsgemäßen Abstützelementes ist aus einem elastisch verformbaren Material hergestellt, insbesondere aus Polypropylen.

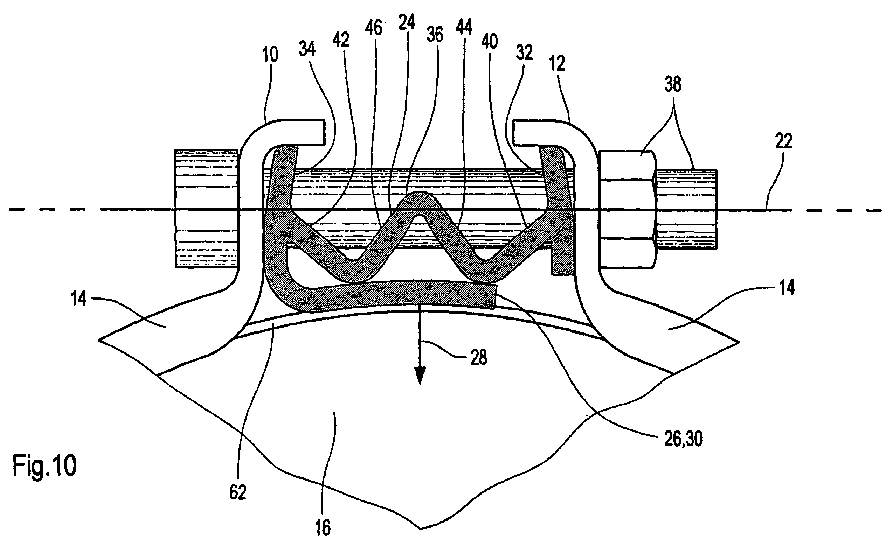

Figur 10 zeigt eine schematische Darstellung des Abstützelements gemäß den Figuren 6 bis 9 in einem montierten Zustand. Gemäß der Darstellung von Figur 10 umgibt ein nur teilweise dargestellter Spannring 14 eine Bremskammer die aus zwei Gehäusehälften gebildet ist, von denen in Figur 10 nur die erste Gehäusehälfte 16 zu erkennen ist. Die erste Gehäusehälfte 16 kann wie in Figur 4 dargestellt ausgebildet sein und weist einen ersten Kragen 62 auf. Der Spannring 14 weist eine erste Öse 10 und eine zweite Öse 12 auf. Zwischen der ersten Öse 10 und der zweiten Öse 12 ist das anhand der Figuren 6 bis 9 erläuterte Abstützelement angeordnet. Die Befestigungsmittel 38 sind durch eine Schraube und eine Mutter gebildet, wobei die Schraube durch die erste Öse 10, die in dem zweiten freien Schenkel 42 vorgesehene zweite Bohrung 34, die Ausnehmung 36, die in dem ersten freien Schenkel 40 vorgesehene erste Bohrung 32 und die zweite Öse 12 geführt ist. Wenn die zu den Befestigungs- beziehungsweise Verbindungsmitteln 38 gehörende Mutter zum Spannen des Spannrings 14 angezogen wird, verringert sich der Abstand zwischen der ersten Öse 10 und der zweiten Öse 12. Dadurch wird das zwischen der ersten Öse 10 und der zweiten Öse 12 angeordnete elastische Abstützelement zusammengedrückt. Da die in den nicht-freien Schenkeln 44, 46 des ersten Abschnitts 24 vorgesehene Ausnehmung 36 einen Anschlag für die Schraube bildet, werden die Verbindungsbereiche zwischen den freien Schenkeln 40, 42 und den nicht-freien Schenkeln 44, 46 des ersten Abschnitts 24 bezogen auf die Darstellung von Figur 10 nach unten gedrückt. Dabei drücken diese Verbindungsbereiche auf die den zweiten Abschnitt 26 bildende Zunge 30, die die Kraft in der ersten Kraftrichtung 28 auf den Verbindungsbereich der Gehäusehälften überträgt, von denen nur die erste Gehäusehälfte 16 dargestellt ist. Die erste Kraftrichtung 28 erstreckt sich dabei senkrecht zu einer (gedachten) Geraden 22, die die erste Öse 10 und die zweite Öse 12 verbindet. Die Zunge 30 dichtet somit zumindest einen Teil des zwischen der ersten Öse 10 und der zweiten Öse 12 gelegenen Verbindungsbereiches der Gehäusehälften ab.

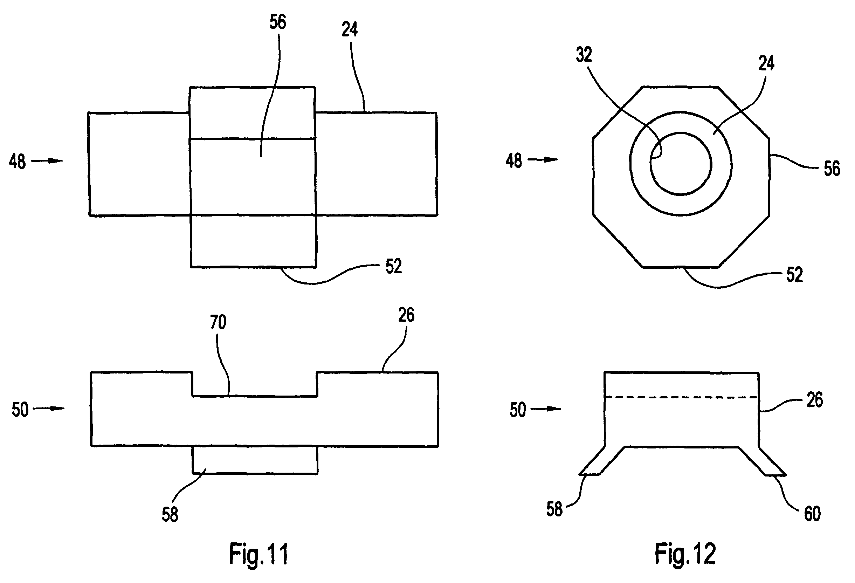

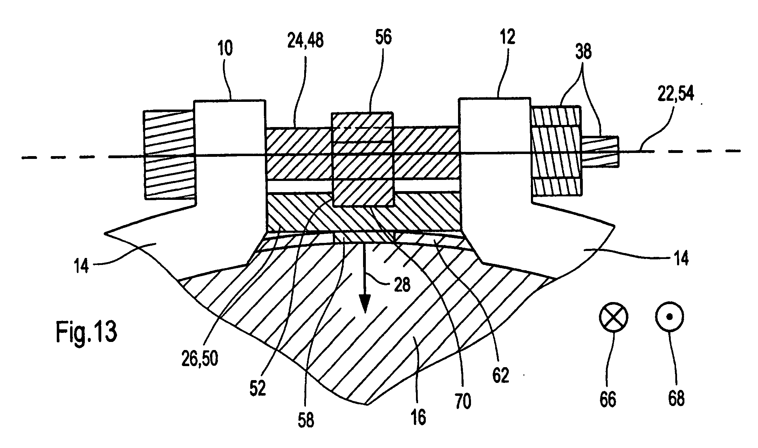

In den Figuren 11 und 12 ist eine zweite Ausführungsform des erfindungsgemäßen Abstützelementes dargestellt, das in diesem Fall zweistückig ausgeführt ist. Dabei zeigt Figur 11 eine Seitenansicht, während Figur 12 eine Vorderansicht ist. Bei dieser Ausführungsform ist der erste Abschnitt 24 durch ein erstes Teil 48 gebildet, während der zweite Abschnitt 26 durch ein zweites Teil 50 gebildet ist. Das erste Teil 48 weist eine erste Bohrung 32 auf, die dazu vorgesehen ist, eine durch die Ösen eines Spannrings geführte Schraube aufzunehmen. Der bezogen auf die Darstellung von Figur 11 mittlere Bereich des ersten Teils 48 beziehungsweise des ersten Abschnitts 24 weist eine Exzentrizität 52 auf. Die Exzentrizität 52 ist in einem nach Art einer Mutter gebildeten Abschnitt eines Außenumfangsbereiches 56 des ersten Abschnitts 24 gebildet. An diesem Außenumfangsbereich 56 kann während oder nach der Montage des Abstützelementes, beziehungsweise während oder nach dem Spannen eines Spannrings, beispielsweise mit einem Schraubenschlüssel angegriffen werden, um das erste Teil 48 zu drehen. Die Drehung des ersten Teils 48 erfolgt derart, dass die Exzentrizität 52 eine Kraft in der ersten Kraftrichtung auf den zweiten Abschnitt 26 ausübt, der durch das zweite Teil 50 gebildet ist. Das zweite Teil 50 weist bei der in den Figuren 11 und 12 dargestellten Ausführungsform einen Sitz 70 auf, der an die Abmessungen der Exzentrizität 52 angepasst ist. Weiterhin weist das zweite Teil 50 einen ersten Steg 58 und einen zweiten Steg 60 auf, wobei diese Stege 58, 60 dazu vorgesehen sind, an den Gehäusehälften 16, 18 einer Bremskammer vorgesehene Kragen 62, 64 zu umgreifen. Im montierten Zustand des Abstützelementes übertragen die Stege 58, 60 Kräfte auf die Kragen 62, 64, wobei diese Kräfte Kraftkomponenten in einer zweiten Kraftrichtung 66 und einer dritten Kraftrichtung 68 (siehe Figur 13) aufweisen, um die Gehäusehälften 16, 18 gegeneinander zu drücken.

Figur 13 zeigt eine schematische Darstellung des Abstützelements gemäß den Figuren 11 und 12 in einem montierten Zustand. Gemäß der Darstellung von Figur 13 ist ein nur teilweise dargestellter Spannring 14 um eine Bremskammer gelegt, die durch zwei Gehäusehälften gebildet ist, von denen in Figur 13 nur die erste Gehäusehälfte 16 zu erkennen ist. Der Spannring 14 weist wieder eine erste Öse 10 und eine zweite Öse 12 auf. Zwischen der ersten Öse 10 und der zweiten Öse 12 ist das anhand der Figuren 11 und 12 erläuterte Abstützelement angeordnet. Verbindungsmittel 38 umfassen eine Schraube und eine Mutter, wobei die Schraube durch die erste Öse 10, die in dem ersten Teil 48 beziehungsweise dem ersten Abschnitt 24 vorgesehene erste Bohrung 32 und die zweite Öse 12 geführt ist. Der erste Abschnitt 24 weist einen nach Art einer Mutter ausgeführten Außenumfangsbereich 56 auf, der mit einer Exzentrizität 52 versehen ist. Die Exzentrizität 52 überträgt eine Kraft in der ersten Kraftrichtung 28 auf den zweiten Abschnitt 26 beziehungsweise das zweite Teil 50, über den Sitz 70. Der zweite Abschnitt 26 überträgt diese Kraft auf den Verbindungsbereich der Gehäusehälften. Um den in Figur 13 dargestellten Montageendzustand zu erzielen, kann der Spannring 14 beispielsweise gespannt werden, während die Exzentrizität 52 bezogen auf die Darstellung von Figur 13 noch nach oben zeigt. Nachdem der Spannring 14 gespannt wurde, kann mit einem Schraubenschlüssel an dem nach Art einer Mutter ausgebildeten Außenumfangsbereich 56 des ersten Abschnitts 24 angegriffen werden, um den ersten Abschnitt 24 beziehungsweise das erste Teil 48 um die Schraube zu drehen, die zu den Verbindungsmitteln 38 zählt. Bei dieser Anordnung fällt die Gerade 22 und die Drehachse 54 somit zusammen. Das erste Teil 48 wird so weit gedreht, dass die Exzentrizität 52 in den in dem zweiten Teil 50 vorgesehenen Sitz 70 eingreift, vorzugsweise einrastet. Das erste Teil 48 und das zweite Teil 50 beziehungsweise der erste Abschnitt 24 und der zweite Abschnitt 26 werden dadurch derart gegenseitig vorgespannt, dass der zweite Abschnitt 26 die Kraft in der ersten Kraftrichtung 28 auf die Gehäusehälften überträgt, wobei die erste Kraftrichtung 28 bezogen auf die Darstellung von Figur 13 nach unten und senkrecht zur Geraden 22 orientiert ist. Da der erste Steg 58 und der zweite Steg 60 unter einem Winkel zueinander angeordnet sind (siehe Figur 12), übertragen der erste Steg 58 und der zweite Steg 60 weiterhin Kräfte auf die Kragen der Gehäusehälften (in Figur 13 ist nur der Kragen 62 der ersten Gehäusehälfte 16 zu erkennen), die Kraftkomponenten in einer zweiten Kraftrichtung 66 und einer dritten Kraftrichtung 68 enthalten. Wie dies in Figur 13 angedeutet ist verläuft die zweite Kraftrichtung 66 in die Zeichenebene hinein, während die dritte Kraftrichtung 68 aus der Zeichenebene heraus orientiert ist. Durch die Kraftkomponenten in die zweite Kraftrichtung 66 und die dritte Kraftrichtung 68 werden die Gehäusehälften zusammen gedrückt, was zu deren gegenseitiger Abdichtung beiträgt.

## Patentansprüche

1. Abstützelement für die zumindest abschnittsweise Anordnung zwischen zwei Ösen (10, 12) eines Spannrings (14), insbesondere zwischen zwei Ösen (10, 12) eines zum Verbinden von zwei Gehäusehälften (16, 18) einer Bremskammer vorgesehenen Spannrings, um eine Kraft in einer ersten Kraftrichtung (28) auf einen Gegenstand (20), insbesondere eine Bremskammer, auszuüben, die im Wesentlichen senkrecht zu einer die Ösen (10, 12) verbindenden Geraden (22) orientiert ist, **dadurch gekennzeichnet, dass** das Abstützelement einen ersten Abschnitt (24) und einen bezüglich diesem beweglichen zweiten Abschnitt (26) aufweist, der die Kraft in der ersten Kraftrichtung (28) auf den Gegenstand (20) überträgt.

2. Abstützelement nach Anspruch 1, **dadurch gekennzeichnet, dass** das Abstützelement einstückig ausgebildet und zumindest abschnittsweise verformbar, insbesondere elastisch verformbar ist.

3. Abstützelement nach Anspruch 1 oder 2, **dadurch gekennzeichnet, dass** der zweite Abschnitt (26) durch eine Zunge (30) gebildet ist, die derart an dem ersten Abschnitt (24) befestigt ist, dass sie bei einer in Richtung der Geraden (22) erfolgenden Verformung des ersten Abschnitts (24) auf den Gegenstand (20) gedrückt wird.

4. Abstützelement nach einem der vorhergehenden Ansprüche, **dadurch gekennzeichnet, dass** es zumindest eine erste Bohrung (32) aufweist, die dazu vorgesehen ist, ein durch zumindest eine Öse (10, 12) geführtes Verbindungsmittel (38) aufzunehmen.

5. Abstützelement nach einem der vorhergehenden Ansprüche, **dadurch gekennzeichnet, dass** der erste Abschnitt (24) im Wesentlichen W-förmig ausgebildet ist.

6. Abstützelement nach Anspruch 5, **dadurch gekennzeichnet, dass** in dem ersten freien Schenkel (40) des im Wesentlichen W-förmigen ersten Abschnitts (24) eine erste Bohrung (32) und in dem zweiten freien Schenkel (42) des im Wesentlichen W-förmigen Abschnitts eine zweite Bohrung (34) vorgesehen ist.

7. Abstützelement nach Anspruch 5 oder 6, **dadurch gekennzeichnet, dass** der zweite Abschnitt (26) an einem freien Schenkel (42) des im Wesentlichen W-förmigen ersten Abschnitts (24) befestigt ist.

8. Abstützelement nach einem der Ansprüche 5 bis 7, **dadurch gekennzeichnet, dass** zumindest einer der zwischen den freien Schenkeln (40, 42) des im Wesentlichen W-förmigen ersten Abschnitts (24) vorgesehenen Schenkel (44, 46b) eine Ausnehmung (36) aufweist.

9. Abstützelement nach Anspruch 1 oder einem der Ansprüche 3 bis 8, **dadurch gekennzeichnet, dass** der erste Abschnitt (24) und der zweite Abschnitt (26) durch getrennte Teile gebildet sind.

10. Abstützelement nach einem der vorhergehenden Ansprüche, **dadurch gekennzeichnet, dass** der erste Abschnitt (24) eine Exzentrizität (52) aufweist und um eine Drehachse (54) drehbar ist.

11. Abstützelement nach Anspruch 10, **dadurch gekennzeichnet, dass** die Drehachse (54) im Wesentlichen parallel zu Geraden (22) ist.

12. Abstützelement nach Anspruch 10 oder 11, **dadurch gekennzeichnet, dass** der erste Abschnitt (24) in seinem Außenumfangsbereich (56) zumindest abschnittsweise nach Art einer Mutter ausgebildet ist.

13. Abstützelement nach einem der vorhergehenden Ansprüche, **dadurch gekennzeichnet, dass** es zumindest teilweise aus Kunststoff gebildet ist.

14. Abstützelement nach Anspruch 13, **dadurch gekennzeichnet, dass** der Kunststoff Polypropylen ist.

15. Abstützelement nach einem der vorhergehenden Ansprüche, **dadurch gekennzeichnet, dass** der zweite Abschnitt (26) zumindest einen Steg (58, 60) aufweist, der dazu vorgesehen ist, einen Kragen (62, 64) des Gegenstandes zu umgreifen.

16. Abstützelement nach einem der vorhergehenden Ansprüche, **dadurch gekennzeichnet, dass** ein erster Steg (58) eine im Wesentlichen senkrecht zur Geraden (22) und senkrecht zur ersten Kraftrichtung (28) orientierte Kraftkomponente in einer zweiten Kraftrichtung (66) auf den Gegenstand (20) ausübt und/oder dass ein zweiter Steg (60) eine im Wesentlichen senkrecht zur Geraden (22) und senkrecht zur ersten Kraftrichtung (28) orientierte Kraftkomponente in einer dritten Kraftrichtung (68) auf den Gegenstand (20) ausübt.

## Claims

1. Support element designed to fit in at least certain regions between two eyes (10, 12) of a clamping ring (14), in particular between two eyes (10, 12) of a clamping ring used to connect two housing halves (16, 18) of a brake chamber, in order to transmit a force to an object (20) in a first force direction (28) oriented essentially perpendicular to a straight line (22) connecting the eyes (10, 12), **characterised in that** the support element has a first section (24) and a second section (26) displaceable relative to it, which transmits force to the object (20) in the first force direction (28).

2. Support element as claimed in claim 1, **characterised in that** the support element is made from a single piece and is deformable in certain regions, in particular elastically deformable.

3. Support element as claimed in claim 1 or 2, **characterised in that** the second section (26) is provided in the form of a tongue (30) which is secured to the first section (24) so that it is pressed against the object (20) when the first section (24) is deformed in the direction of the straight line (22).

4. Support element as claimed in one of the preceding claims, **characterised in that** it has at least a first bore (32) provided as a means of accommodating connecting means (38) inserted through at least one eye (10, 12).

5. Support element as claimed in one of the preceding claims, **characterised in that** the first section (24) is essentially of a W-shaped design.

6. Support element as claimed in claim 5, **characterised in that** a first bore (32) is provided in the first free leg (40) of the essentially W-shaped first section (24) and a second bore (34) is provided in the second free leg (42) of the essentially W-shaped section.

7. Support element as claimed in claim 5 or 6, **characterised in that** the second section (26) is secured to a free leg (42) of the essentially W-shaped first section (24).

8. Support element as claimed in one of claims 5 to 7, **characterised in that** at least one of the legs (44, 46b) disposed between the free legs (40, 42) of the essentially W-shaped first section (24) has a recess (36).

9. Support element as claimed in claim 1 or in one of claims 3 to 8, **characterised in that** the first section (24) and the second section (26) are made as separate parts.

10. Support element as claimed in one of the preceding claims, **characterised in that** the first section (24) has an eccentricity (52) and is rotatable about an axis of rotation (54).

11. Support element as claimed in claim 10, **characterised in that** the axis of rotation (54) is essentially parallel with the straight line (22).

12. Support element as claimed in claim 10 or 11, **characterised in that** the first section (24) is designed in the form of a nut in at least certain regions of its outer peripheral region (56)

13. Support element as claimed in one of the preceding claims, **characterised in that** it is at least partially made from plastic.

14. Support element as claimed in claim 13, **characterised in that** the plastic is polypropylene.

15. Support element as claimed in one of the preceding claims, **characterised in that** the second section (26) has at least one web (58, 60) provided as a means of engaging round a collar (62, 64) of the object.

16. Support element as claimed in one of the preceding claims, **characterised in that** a first web (58) transmits a force component to the object (20) in a second force direction (66) oriented essentially perpendicular to the straight line (22) and perpendicular to the first force direction (28) and/or a second web (60) transmits a force component to the object (20) in a third force direction (68) oriented essentially perpendicular to the straight line (22) and perpendicular to the first force direction (28).

## Revendications

1. Élément de support à mettre au moins par tronçon entre deux oeillets (10, 12) d'un anneau (14) de serrage, notamment entre deux oeillets (10, 12) d'un anneau de serrage prévu pour assembler deux moitiés (16, 18) du corps d'une chambre de combustion, pour appliquer une force dans une première direction (28) sur un objet (20), notamment sur une chambre de combustion, qui est sensiblement perpendiculaire à une droite (22) reliant les oeillets (10, 12), **caractérisé en ce que** l'élément de support a un premier tronçon (24) et un deuxième tronçon (26) mobile par rapport à celui-ci et transmettant à l'objet (20) la force dans la première direction (28).

2. Élément de support suivant la revendication 1, **caractérisé en ce que** l'élément de support est d'un seul tenant et peut être déformé au moins par tronçon en étant notamment déformable élastiquement.

3. Élément de support suivant la revendication 1 ou 2, **caractérisé en ce que** le deuxième tronçon (26) est formé par une languette (30) qui est fixée au premier tronçon (24) de manière à être repoussée sur l'objet (20) pour une déformation du premier tronçon (24) s'effectuant dans la direction de la droite (22).

4. Élément de support suivant l'une des revendications précédentes, **caractérisé en ce qu'**il a au moins un premier trou (32) qui est prévu pour recevoir un moyen (38) de liaison passant dans au moins un oeillet (10, 12).

5. Élément de support suivant l'une des revendications précédentes, **caractérisé en ce que** le premier tronçon (24) est sensiblement en forme de W.

6. Élément de support suivant la revendication 5, **caractérisé en ce que**, dans la première branche (40) libre du premier tronçon (24) sensiblement en forme de W, est prévu un premier trou (32) et dans la deuxième branche (42) libre du tronçon sensiblement en forme de W un deuxième trou (34).

7. Élément de support suivant la revendication 5 ou 6, **caractérisé en ce que** le deuxième tronçon (26) est fixé à une branche (42) libre du premier tronçon (24) sensiblement en forme de W.

8. Élément de support suivant l'une des revendications 5 à 7, **caractérisé en ce qu'**au moins l'une des branches (44, 46b) prévues entre les branches (40, 42) libres du premier tronçon (24) sensiblement en forme de W a un évidement (36).

9. Élément de support suivant la revendication 1 ou l'une des revendications 3 à 8, **caractérisé en ce que** le premier tronçon (24) et le deuxième tronçon (26) sont formés par des pièces distinctes.

10. Élément de support suivant l'une des revendications précédentes, **caractérisé en ce que** le premier tronçon (24) a une excentricité (52) et peut tourner autour d'un axe (54) de rotation.

11. Élément de support suivant la revendication 10, **caractérisé en ce que** l'axe (54) de rotation est sensiblement parallèle à la droite (22).

12. Élément de support suivant la revendication 10 ou 11, **caractérisé en ce que** le premier tronçon (24) est constitué dans sa partie (56) de pourtour extérieur au moins par tronçon à la façon d'un écrou.

13. Élément de support suivant l'une des revendications précédentes, **caractérisé en ce qu'**il est au moins en partie en matière plastique.

14. Élément de support suivant la revendication 13, **caractérisé en ce que** la matière plastique est du polypropylène.

15. Élément de support suivant l'une des revendications précédentes, **caractérisé en ce que** le deuxième tronçon (26) a au moins une aile (58, 60) prévue pour envelopper un collet (62, 64) de l'objet.

16. Élément de support suivant l'une des revendications précédentes, **caractérisé en ce qu'**une première aile (58) applique à l'objet (20) dans une deuxième direction (66) une composante de force dirigée sensiblement perpendiculairement à la droite (22) et perpendiculairement à la première direction (28) de force et/ou **en ce qu'**une deuxième aile (60) applique à l'objet (20) une composante de force dans une troisième direction (68) dirigée sensiblement perpendiculairement à la droite (22) et perpendiculairement à la première direction (28) de force.
